# EUROPÄISCHE PATENTSCHRIFT

(11) **EP 4 591 033 B1**
(45) Veröffentlichungstag und Bekanntmachung des Hinweises auf die Patenterteilung: **18.11.2026**
(21) Anmeldenummer: 24791295.9
(22) Anmeldetag: 15.10.2024
(51) Int. Cl.: G01D 21/00, B60B 1/00, B60B 7/00, B60B 27/00

(54) **SENSORSYSTEM UND VERFAHREN ZUR ZUSTANDSÜBERWACHUNG**
SENSOR SYSTEM AND METHOD FOR CONDITION MONITORING
SYSTÈME DE CAPTEUR ET PROCÉDÉ DE SURVEILLANCE D'ÉTAT

(30) Priorität: 17.10.2023 DE 102023128422
(43) Veröffentlichungstag der Anmeldung: 30.07.2025
(73) Patentinhaber: SAF-HOLLAND GmbH, 63856 Bessenbach (DE)
(72) Erfinder: MEDER, David, 63776 Mömbris-Angelsberg (DE); BEIERLORZER, Oliver, 91336 Heroldsbach (DE); ENDRES, Fabio, 91607 Gebsattel (DE)
(74) Vertreter: Müller Schupfner & Partner Patent- und Rechtsanwaltspartnerschaft mbB (Muc)
(86) Internationale Anmeldenummer: PCT/EP2024/078945
(87) Internationale Veröffentlichungsnummer: WO 2025/082929

(56) Entgegenhaltungen:
- EP-A1- 4 245 622
- EP-B1- 3 191 319
- WO-A1-2017/072143
- DE-A1- 102018 213 411
- US-A1- 2023 122 440

## Beschreibung

Die vorliegende Erfindung betrifft ein Sensorsystem, eine mit einem solchen Sensorsystem ausgestattete Radkappe sowie ein Verfahren zur Zustandsüberwachung eines Fahrwerkssystems.

Aus dem Stand der Technik sind bereits Lösungen bekannt, bei denen im Bereich des Fahrwerks eines Fahrzeuges, insbesondere bevorzugt Nutzfahrzeuges, angeordnete Sensoren den Betriebszustand des Fahrzeuges zu überwachen. Dabei werden beispielsweise Temperatursensoren im Bereich der Radaufhängung eines Fahrzeuges installiert und mit einer zentralen Messeinheit verbunden, um über die in den einzelnen Bereichen der Radaufhängung gemessenen Temperaturwerte Rückschlüsse auf den Betriebszustand und gegebenenfalls vorhandenen Verschleiß der Radaufhängung ziehen zu können. Problematisch ist hierbei, dass die einzelnen jeweils in dem begrenzten Bauraum einer Radaufhängung zu integrierenden Sensoren schwer unterzubringen sind, und darüber hinaus ein Nachrüsten einer solchen Sensoranordnung in einem vorhandenen Fahrwerkssystem kaum möglich ist. Darüber hinaus sind Sensoren, welche innerhalb der Radaufhängung integriert vorgesehen sind, von außen nur schwer zu erreichen, was insbesondere eine Wartung im Fehlerfall erschwert.

Die EP 3 191 319 B1 offenbart einen Sensor für ein Radende eines Nutzfahrzeugs, welcher verschiedene Teile, wie eine Platine und verschiedene Sensoren, aufweist. Die DE 10 2018 213411 A1, WO 2017/072143 A1, die EP 4 245 622 A1 und die AU 2018 338 210 A1 offenbaren weitere Merkmale von Sensorsystemen.

Aufgabe der vorliegenden Erfindung ist es, ein Sensorsystem und ein Verfahren zur Zustandsüberwachung bereitzustellen, welches besonders einfach an vorhandenen Fahrzeugen nachrüstbar ist und welches eine Vielzahl von Zustandswerten ermitteln und überwachen kann.

Diese Aufgabe wird gelöst mit einem Sensorsystem gemäß Anspruch 1, einer Radkappe gemäß Anspruch 10, sowie einem Verfahren gemäß Anspruch 14.

Erfindungsgemäß ist ein Sensorsystem, insbesondere zum Einsatz am Achsende eines Nutzfahrzeuges, vorgesehen, umfassend eine Platine und zumindest einen Sensor, wobei die Platine zumindest einen Befestigungsabschnitt zur Festlegung an einem rotierenden Teil einer Radaufhängung aufweist, wobei eine Energiequelle vorgesehen ist, welche elektrisch leitend mit der Platine verbunden ist, wobei der zumindest eine Sensor ortsfest an der Platine festgelegt oder festlegbar ist und als Temperatursensor, als Feuchtigkeitssensor, als Öldampf- und/oder Aerosolsensor, als Vibrationssensor, oder als Beschleunigungssensor ausgelegt ist, wobei die Sensoranordnung ein Kommunikationsmodul aufweist, welches elektrisch leitend mit der Platine verbunden ist und zur drahtlosen Kommunikation mit einem Überwachungssystem ausgelegt ist. Gemäß der Erfindung ist das Sensorsystem zur Festlegung an einer Radkappe ausgebildet, wobei die Radkappe einen Grundköper mit einem Rotationsmittelpunkt aufweist, wobei die Platine zumindest abschnittsweise kreisringförmig um den Rotationsmittelpunkt ausgebildet ist. Das Sensorsystem gemäß der vorliegenden Erfindung weist als erste Grundkomponente eine Platine auf, an welcher unmittelbar oder mittelbar eine Energiequelle vorgesehen ist und ortsfest zu welcher zumindest ein Sensor festgelegt oder festlegbar ist. Die Platine weist darüber hinaus einen Befestigungsabschnitt zur Festlegung der Platine an einem rotierenden Teil einer Radaufhängung, vorzugsweise an einer Radkappe, auf. Der zumindest eine Sensor ist dabei derart an der Platine angeordnet und festgelegt, dass er den jeweiligen physikalischen Wert, für dessen Messung er ausgelegt ist, im Bereich des Achsendes der Radaufhängung, an welchem das Sensorsystem mit Vorteil angeordnet ist, messen kann. Darüber hinaus ist ein Kommunikationsmodul mit der Platine verbunden oder mit Vorteil integral mit der Platine ausgeführt, welches dafür ausgelegt ist, die vom zumindest einen Sensor ermittelten Signale an ein Überwachungssystem zu übermitteln. Das Kommunikationsmodul ist dabei mit Vorteil für die drahtlose Signalübermittlung ausgelegt, beispielsweise mittels Bluetooth- oder WiFi- Schnittstelle. Diese grundlegende Auslegung des Sensorsystems erlaubt es, das Sensorsystem an einer Vielzahl von Bereichen eines Fahrzeuges anzuordnen um dort, mit Vorteil energieautark, Zustandswerte, wie Temperatur, Vibrationen oder bestimmte Schwebstoffe in der Umgebungsluft messen zu können, und auf diese Weise Rückschluss auf den Betriebszustand und eventuelle Fehler am Fahrzeug zu ermitteln. Die Eignung des Sensorsystems, neben der Temperatur auch weitere physikalische Faktoren wie Vibrationen und Aerosole, wie beispielsweise Gerüche, an oder in der Umgebung eines Fahrzeuges zu messen, erlaubt es, sehr genaue Rückschlüsse auf den Zustand des Fahrzeuges und das Vorliegen eventueller Fehler zu ziehen. Dank der Funktionsintegration aller wesentlicher Teile auf oder an der Platine lässt sich das Sensorsystem insbesondere bevorzugt an existierenden Fahrzeugen ohne eine entsprechende Sensoranordnung nachrüsten.

In einem Ausführungsbeispiel ist die Energiequelle in der Platine integriert vorgesehen, oder lösbar an der Platine festlegbar und elektrisch mit der Platine verbunden, oder zumindest teilweise nicht unmittelbar an der Platine festgelegt und elektrisch leitend mit der Platine verbunden. Um eine besonders kompakte Bauweise des Sensorsystems zu erreichen, ist die Energiequelle unmittelbar in der Platine integriert, also beispielsweise als integrierter Schaltkreis in die Platine eingearbeitet. Diese besonders kompakte und platzsparende Bauweise lässt eine einfache Integration des Sensorsystems an verschiedenen Fahrzeugtypen zu. Alternativ hierzu, und insbesondere, um die Wartung der Energiequelle zu verbessern, kann die Energiequelle auch nur teilweise an der Platine unmittelbar festgelegt sein, wobei beispielsweise ein Energiespeicher lösbar vorgesehen ist, welcher auf diese Weise einfach gewechselt werden kann. Um die Wartung der Energiequelle noch weiter zu erleichtern, kann diese auch, zumindest teilweise an anderer Stelle am Fahrzeug angeordnet sein und lediglich elektrisch mit der Platine verbunden sein, sodass beispielsweise ein extern angeordneter Energieversorger wie eine Solarzelle oder ein Kabelanschluss an den Bordstrom des Fahrzeuges, als Energiequelle dienen kann, welche die Platine von extern mit elektrischer Spannung versorgt. Die Wahl des entsprechenden Integrationsgrades der Energiequelle auf der Platine wird insbesondere anhand der verfügbaren Bauraumbedingungen ausgewählt.

In einem Ausführungsbeispiel weist die Energiequelle einen Energiespeicher auf, welcher ausgelegt ist, elektrische Energie zur speichern und an die Verbraucher, wie Sensoren und Kommunikationsmodul wieder abzugeben. Als Energiespeicher kommt insbesondere bevorzugt eine Batterie, mit Vorteil eine wiederaufladbare Batterie zum Einsatz. Neben der entsprechend erforderlichen Kapazität, ist dieser Energiespeicher insbesondere bevorzugt für Temperaturbereiche von oberhalb von 50 °C ausgelegt, um einen sicheren Einsatz der Energiequelle auch in diesen, im Bereich eines Fahrwerks eines Fahrzeuges üblichen Temperaturen zu gewährleisten.

In einem Ausführungsbeispiel weist die Energiequelle einen Energieerzeuger auf, welcher dafür ausgelegt ist elektrische Energie aus relativen Bewegungen von Teilen der Radaufhängung oder aus Strahlungsenergie zu erzeugen. Alternativ oder zusätzlich zu einem Energiespeicher, wie einer Batterie, weist die Energiequelle einen Energieerzeuger auf, welcher aus vorhandenen Bewegungen oder im Bereich der Sensoranordnung eintreffender Strahlung elektrische Energie erzeugen kann. Für den Fall, dass die Energiequelle nur einen Energieerzeuger und keinen Energiespeicher aufweist, ist der Energieerzeuger mit Vorteil dafür ausgelegt, dann elektrische Energie zu erzeugen, wenn das Fahrzeug im Einsatz ist, also bewegt wird.

In einem Ausführungsbeispiel weist der Energieerzeuger einen induktiven Spannungserzeuger auf, welcher zumindest eine Spule zur Spannungsinduktion aufweist. Der induktive Spannungserzeuger nutzt dabei die relative Bewegung des Sensorsystems gemeinsam mit einem rotierenden Teil einer Radaufhängung bezogen auf ein am feststehenden Teil einer Radaufhängung erzeugtes elektrisches Feld zur Erzeugung einer Induktionsspannung. Alternativ zur induktiven Spannungserzeugung könnte auch eine auf Piezoelementen basierende Spannungserzeuger vorhanden sein, welcher insbesondere relative Bewegungen und Beschleunigung ausgewählter Komponenten der Radaufhängung relativ zu anderen ausnutzt, um eine entsprechende elektrische Spannung bereitzustellen.

In einem Ausführungsbeispiel umfasst das Sensorsystem weiterhin einen Felderzeuger, welcher zur Festlegung am feststehenden Teil der Radaufhängung ausgebildet ist, wobei der Felderzeuger ein Magnetfeld oder ein elektrisches Feld bereitstellt, innerhalb welchem die Spule angeordnet ist. Der Felderzeuger ist mit Vorteil ein Dauermagnet, welcher am feststehenden Teil einer Radaufhängung, vorzugsweise am Achsstummel oder der Radmutter, angeordnet und festgelegt ist und in der Nähe des Sensorsystems ein elektrisches Feld erzeugt, relativ zu welchem sich das Sensorsystem bei Rotation des Rades bewegt derart, dass in der Spule des Energieerzeugers eine elektrische Spannung induziert wird. Alternativ zu einem Dauermagneten könnte auch eine Spule vorgesehen sein, welche über das Bordnetz des Fahrzeuges mit elektrischem Strom beaufschlagt wird und ein entsprechendes Magnetfeld erzeugt, innerhalb welchem sich die Spule des Energieerzeugers bewegt. Der Vorteil der zweiten Lösung ist, dass diese an und abgeschaltet werden kann und so eine bedarfsbasierte Nutzung erlaubt. Es versteht sich, dass zur Erzeugung einer konstanten elektrischen Energie auch eine Vielzahl von Spulen und/oder Energieerzeugern über den Umfang einer um den Rotationsmittelpunkt verlaufenden Bahn verteilt vorgesehen sein können.

In einem Ausführungsbeispiel weist der Energieerzeuger ein Photovoltaik-Modul auf, welches dafür ausgelegt ist, eine elektrische Spannung und entsprechenden elektrischen Strom in den Energiespeicher einzuspeisen. Zusätzlich oder alternativ zur Energieerzeugung mittels Induktion, weist der Energieerzeuger vorzugsweise ein Photovoltaik-Modul auf, welches mit Vorteil an der Außenseite einer Radaufhängung, beispielsweise an der Außenseite einer Radkappe, angeordnet ist. Hierdurch wird bei Sonneneinstrahlung eine elektrische Spannung erzeugt. Die Kombination verschiedener Energieerzeuger, also beispielsweise eines Photovoltaik-Moduls und eines induktiven Spannungserzeugers, erlaubt es, dass bei verschiedenen Betriebszuständen und Tageszeiten stets ausreichende elektrische Energieversorgung des Sensorsystems bereitgestellt werden kann.

**In** einem Ausführungsbeispiel weist das Sensorsystem zumindest zwei Sensoren, vorzugsweise zumindest drei Sensoren auf, wobei bevorzugt zumindest einer der Sensoren als Temperatursensor ausgelegt ist. Besonders bevorzugt sind mehr als zwei Sensoren an der Platine ausgebildet oder festgelegt, was eine Zustandsüberwachung verschiedener physikalischer Zustände im Bereich des Sensorsystems erlaubt. Neben einer Temperaturüberwachung kann dabei Weise ein Vibrationssensor vorgesehen sein, welcher periodische Schwingungen und Stöße ermittelt und quantifiziert, derart dass aus dieser physikalischen Größe Rückschlüsse auf eventuell vorhandenen Verschleiß der Radlager gezogen werden können. Darüber hinaus können Öldampf- und/oder Aerosolsensoren vorgesehen sein, welche die Konzentration von Öl und ähnlichen Schmierstoffen, sowohl im gasförmigen, als auch im tröpfchenförmigen Zustand ermitteln können, wodurch Rückschlüsse auf eventuelle Undichtigkeiten im Fahrwerkssystem gezogen werden können. Diese Sensoren können auch als Geruchssensoren fungieren und andere Partikel und Schwebstoffe in der Umgebungsluft ermitteln, und so zum Beispiel einen Verschleiß von Lagerdichtungen frühzeitig anzeigen. Zusätzlich oder alternativ können auch Feuchtigkeitssensoren vorgesehen sein, welche ebenfalls auf Undichtigkeiten der Abdeckung der Radaufhängung hinweisen können, welche wiederum Korrosion verursachen können und daher zu vermeiden sind.

**In** einem Ausführungsbeispiel ist an der Platine und/oder im Überwachungssystem eine Auswerteeinheit vorgesehen, welche dafür ausgelegt ist, die von dem zumindest einen Sensor empfangenen Signale mit gespeicherten Referenzwerten zu vergleichen, wobei die Auswerteeinheit dazu ausgelegt ist, bei einer voreingestellten Abweichung eines Signals von einem Referenzwert eine Warnung auszugeben. Die Auswerteeinheit ist vorzugsweise unmittelbar an der Platine angeordnet oder an einem abseits der Platine vorhandenen Überwachungssystem. Dabei ist die Auswerteeinheit dafür ausgelegt, die von den Sensoren übermittelten Werte mit in der Auswerteeinheit gespeicherten Referenzwerten zu vergleichen, um Rückschlüsse auf einen Fehlerzustand im System ziehen zu können. Im Fall, dass die Auswerteeinheit an einem zentralen Überwachungssystem vorgesehen ist, kommuniziert die Platine über das Kommunikationsmodul mit dem zentralen Überwachungssystem und der Auswerteeinheit. Der Vorteil dieser Ausführungsform ist es, dass mehrere Sensorsysteme, insbesondere Platinen mit daran angeordneten Sensoren, mit einem zentralen Überwachungssystem in Verbindung stehen können, wobei vorzugsweise nicht nur ein Vergleich von gemessenen Sensorsignalen mit Referenzwerten stattfinden kann, sondern auch ein Vergleich der gemessenen Sensorsignale einer Radaufhängung mit den Sensorsignalen einer weiteren Radaufhängung. Auf diese Weise können Fälle ermittelt werden, bei denen an allen Radaufhängungen gleichzeitig bestimmte Werte ansteigen, wobei dies in diesem Fall nicht auf einen individuellen Fehler an einer bestimmten Radaufhängung hindeutet, sondern beispielsweise auf geänderte Umgebungsbedingungen, welche gegebenenfalls unkritisch sind.

Erfindungsgemäß ist weiterhin eine Radkappe, insbesondere zum Einsatz am Achsende eines Nutzfahrzeuges, vorgesehen, aufweisend einen Grundkörper, welcher im Wesentlichen scheibenförmig ausgebildet ist, wobei der Grundkörper eine erste Seite aufweist, an welcher eine Platine eines Sensorsystems, wie zuvor beschrieben, festgelegt ist. Für eine besonders einfache Integration des Sensorsystems an einem Fahrzeug, insbesondere bevorzugt einem Nutzfahrzeug, ist eine Radkappe mit einem solchen Sensorsystem vorgesehen. Die Radkappe weist dabei eine aus dem Stand der Technik bekannte Außengeometrie auf, welche besonders bevorzugt form- und kraftschlüssig an einer Radaufhängung, insbesondere an der Außenseite eines Fahrzeugrades, festgelegt werden kann. Für den Fall, dass ein induktiver Energieerzeuger am Sensorsystem vorgesehen ist, wird zusätzlich noch ein Felderzeuger am feststehenden Teil der Radaufhängung festgelegt, bevor die Radkappe an der Radaufhängung befestigt wird. Die Radkappe weist dabei einen Grundkörper auf, vorzugsweise eine bereits aus dem Stand der Technik bekannte, herkömmliche Radkappe mit einem scheibenförmigen oder leicht gekrümmt scheibenförmigen, zentralen Abschnitt, an welchem die Platine des Sensorsystems befestigt ist.

In einem Ausführungsbeispiel der Radkappe mit einem zuvor beschriebenen Sensorsystem, ist das Photovoltaik-Modul an einer, der ersten Seite abgewandten zweiten Seite des Grundkörpers angeordnet und festgelegt, wobei die zweite Seite bezogen auf das Achsende, die nach außen gewandte Seite des Grundkörpers ist.

In der Erfindung weist der Grundköper einen Rotationsmittelpunkt auf, wobei die Platine zumindest abschnittsweise kreisringförmig um den Rotationsmittelpunkt ausgebildet ist. Die Form der Platine ist mit Vorteil angepasst an die Geometrie der inneren Seite der Radkappe. Dabei kann bevorzugt ein zentraler kreisförmiger Bereich der Radkappe von der Platine ausgespart sein, derart dass dort eine formschlüssige Befestigung der Platine möglich ist. Darüber hinaus ist die Platine in Befestigungsabschnitten vorzugsweise sowohl am inneren Kreisring, als auch am äußeren Kreisring, mittels hinterschneidender Clips auf einfache Weise am Grundkörper formschlüssig festlegbar. Eine formschlüssige Festlegung erlaubt es, die Platine zu Wartungszwecken vom Grundkörper der Radkappe abzunehmen. Alternativ hierzu oder zusätzlich kann die Platine auch stoffschlüssig am Grundkörper festgelegt sein, um eine stabile und verschleißfreie Befestigung bereitzustellen.

In einem Ausführungsbeispiel der Radkappe ist zumindest einer der Sensoren beabstandet vom Rotationsmittelpunkt angeordnet ist. Eine exzentrische Anordnung der Sensoren ist insbesondere im Falle von Vibration oder Beschleunigungssensoren bevorzugt, da diese dann einen unrunden bzw. exzentrischen Lauf des Rades einer Radaufhängung bestimmen können, welcher ein Hinweis auf eine ausgeschlagene Radlagerung ist.

In einem Ausführungsbeispiel der Radkappe ist die Spule beabstandet vom Rotationsmittelpunkt des Grundkörpers angeordnet, wobei der Abstand der Spule vom Rotationsmittelpunkt mit Vorteil ein 0,1- bis 0,3-faches des mittleren Außenradius' des Grundkörpers ist. Um eine maximale Ausbeute an induktiv erzeugter Spannung zu erreichen, ist die Spule mit Vorteil im Inneren Drittel des Grundkörpers angeordnet, sodass eine permanente, rotierende Bewegung innerhalb des vom Felderzeugers erzeugten, elektrischen oder magnetischen Feldes stattfinden kann.

Weiterhin ist erfindungsgemäß ein Verfahren zur Zustandsüberwachung an einer Radaufhängung vorgesehen, umfassend die Schritte:
a) Bereitstellen einer zuvor beschriebenen Radkappe und Festlegen der Radkappe an einem Achsende der Radaufhängung;
b) Auswerten der von dem zumindest einen Sensor empfangenen Signale, um eine Abweichung der Signalwerte von gespeicherten Referenzwerte zu ermitteln;
c) Basierend auf der ermittelten Abweichung, Ermitteln eines Systemzustandes der Radaufhängung;
d) Ausgabe einer Information zum Systemzustand an einen Fahrzeugführer und/oder eine zentrale Verwaltung.

Basierend auf dem zuvor beschriebenen Sensorsystem und der zuvor beschriebenen Radkappe, ist insbesondere ein Verfahren zur Zustandsüberwachung an der Radaufhängung eines Fahrzeuges, insbesondere bevorzugt eines Nutzfahrzeuges vorgesehen. Die vom Sensorsystem ermittelten oder übermittelten Signalwerte werden dabei durch eine Auswerteeinheit bearbeitet und es wird eine Information, beispielsweise eine Warnung, an den Fahrzeugführer des Fahrzeuges oder an eine zentrale Verwaltungseinheit übermittelt. Auf diese Weise kann beispielsweise eine Flottenverwaltung von Nutzfahrzeugen aktuelle Werte über den Betriebszustand und Verschleißzustand ihrer Fahrzeuge erhalten. Zu diesem Zweck können die von der Auswerteeinheit erzeugten Informationen auch in einem Zwischenspeicher, welche am Fahrzeug zentral angeordnet ist, abgespeichert werden, um zu einem späteren Zeitpunkt in der Zentrale oder der Werkstatt der Fahrzeugflotte abgerufen zu werden.

Weitere Vorteile und charakteristische Eigenschaften der vorliegenden Erfindung ergeben sich aus der nachfolgenden Beschreibung mit Bezug auf die beigefügten Figuren.

Es zeigen:
- Fig. 1 -: eine schematische Ansicht einer Ausführungsform einer Radkappe mit Sensorsystem,
- Fig. 2 -: eine schematische Seitenansicht einer Ausführungsform einer Radaufhängung mit Radkappe und Sensorsystem.

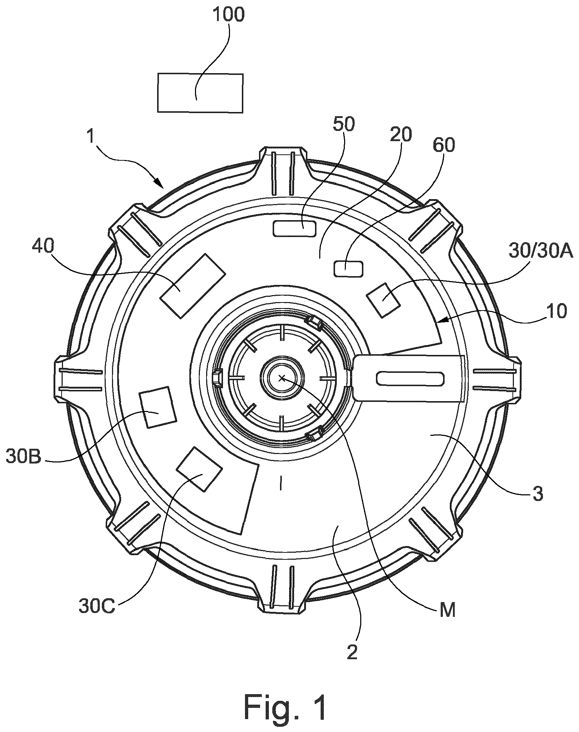

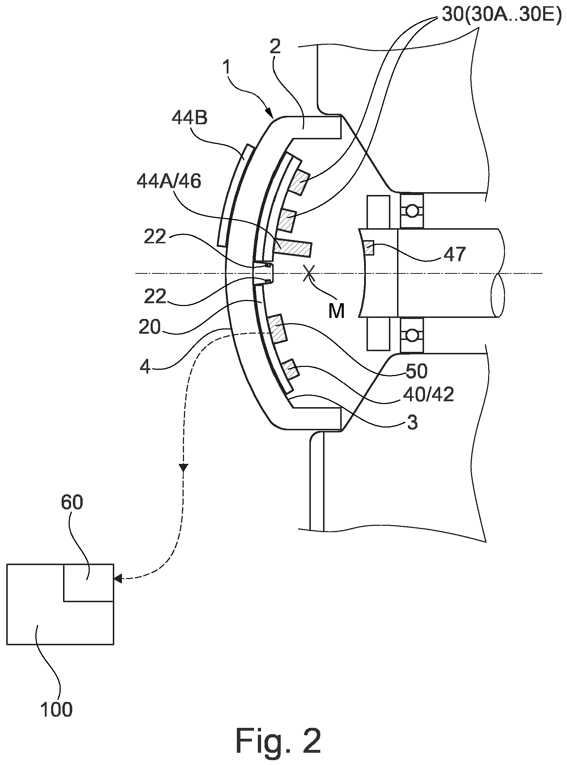

Fig. 1 zeigt eine Ausführungsform einer Radkappe 1 mit einem Sensorsystem 10 gemäß der vorliegenden Erfindung. Die Radkappe weist einen Grundkörper 2 auf, welcher im Wesentlichen scheiben- oder kappenförmig ausgeführt ist. An der ersten Seite 3 des Grundkörpers 2 ist eine Platine 20 befestigt, an welcher zumindest zwei, im vorliegenden Beispiel drei, Sensoren 30 angeordnet und elektrisch verbunden sind. Bevorzugt sind die Sensoren 30 in der Platine 20 integriert ausgeführt, dass heiß unlösbar mit der Platine 20 verbunden. Dies ergibt eine besonders robuste Ausführung des Sensorsystems 10, welches somit besonders widerstandsfähig gegen beispielsweise Stöße ist. Ein erster der Sensoren 30 ist dabei mit Vorteil als Temperatursensor 30A ausgeführt, ein weiterer als Feuchtigkeitssensor 30B und ein dritter als Öldampf- und/oder Aerosolsensor 30C. Es versteht sich, dass alternativ oder zusätzlich ein Vibrationssensor 30D oder ein Beschleunigungssensor 30E an der Platine 20 vorgesehen sein können. Weiterhin weist die Platine 20 eine Energiequelle 40 auf, welche zur Versorgung der Sensoren 30 und des ebenfalls an der Platine 20 festgelegten Kommunikationsmoduls 50 mit elektrischer Energie dient. Das Kommunikationsmodul 50 steht mit einem, in diesem Ausführungsbeispiel separat und beabstandet von der Platine 20 angeordneten, Überwachungssystem 100 in Verbindung, welches die von dem Kommunikationsmodul 50 übermittelten Informationen der Sensoren 30 auswertete und Zustandsänderungen am Fahrzeug überwacht. Dabei ist in diesem Beispiel eine Auswerteeinheit 60 unmittelbar an der Platine 20 angeordnet und festgelegt, welches die von den Sensoren 30 ermittelten Werte einer ersten Auswertung unterzieht und daraufhin Informationen und /oder Warnmeldungen über das Kommunikationsmodul 50 an das Überwachungssystem 100 übermittelt. Der Vorteil dieser Ausführungsform ist, dass eine Vielzahl relevanter Funktionen auf der Platine 20 vereint werden kann, was die Nachrüstung des Sensorsystems 10 an Fahrzeugen erleichtert. Der Nachteil ist, dass auch die Auswerteeinheit 60 von der Energiequelle 40 mit elektrischer Spannung versorgt werden muss. Es kann daher bevorzugt sein, die Auswerteeinheit 60 getrennt von der Platine 20 anzuordnen, beispielsweise als Teil des Überwachungssystems 100 (siehe Fig. 2).

Fig. 2 zeigt eine weitere Ausführungsform einer erfindungsgemäßen Radkappe 1 mit Sensorsystem 10 in der geschnittenen Seitenansicht. Dabei ist der Bereich eines Achsendes einer Radaufhängung eines Fahrzeuges, insbesondere bevorzugt eines Nutzfahrzeuges, gezeigt. Die Radkappe 1 weist dabei die im Wesentlichen scheibenförmige Geometrie auf, welche also auch eine teller- oder topfförmige Geometrie einschließt. An der ersten Seite 3 des Grundkörpers 2, welche in der Figur rechts, also zum Achsende hingewandt ist, ist die Platine 20 mittels eines Befestigungsabschnitts 22 am Grundkörper 2 festgelegt. Die Energiequelle 40 weist in dieser Ausführungsform ein Photovoltaik-Modul 44B auf, welches an der zweiten Seite 4 des Grundkörpers 2 festgelegt ist, und elektrische Energie in den Energiespeicher 42 einspeist. Zusätzlich umfasst die Energiequelle 40 einen Energieerzeuger 44, welcher als induktiver Energieerzeuger 44A ausgebildet ist und eine Spule 46 aufweist. Zur induktiven Energieerzeugung ist nicht-rotierenden Teil des Achsendes ein Felderzeuger 47 festgelegt, in dessen elektrischem Feld oder Magnetfeld sich die Spule 46 rotierend bewegt und dabei eine elektrische Spannung induziert. Es versteht sich, dass auch nur einer der beiden Energieerzeuger 44, also induktiver Energieerzeuger 44A oder Photovoltaik-Modul 44B vorhanden sein kann. Wie bereits zuvor erläutert, ist in diesem Ausführungsbeispiel die Auswerteeinheit 60 als Teil des Überwachungssystems 100 extern der Platine 20 ausgeführt und steht in Verbindung mit dem Kommunikationsmodul 50, welches die von den Sensoren 30 ermittelten Werte übermittelt.

### Bezugszeichenliste:

- 1 -: Radkappe
- 2 -: Grundkörper
- 3 -: erste Seite
- 4 -: zweite Seite
- 10 -: Sensorsystem
- 20 -: Platine
- 22 -: Befestigungsabschnitt
- 30 -: Sensor
- 30A -: Temperatursensor
- 30B -: Feuchtigkeitssensor
- 30C -: Öldampf- und/oder Aerosolsensor
- 30D -: Vibrationssensor
- 30E -: Beschleunigungssensor
- 40 -: Energiequelle
- 42 -: Energiespeicher
- 44 -: Energieerzeuger
- 44A -: induktiver Spannungserzeuger
- 44B -: Photovoltaik-Modul
- 46 -: Spule
- 47 -: Felderzeuger
- 50 -: Kommunikationsmodul
- 60 -: Auswerteeinheit
- 100 -: Überwachungssystem
- M -: Rotationsmittelpunkt

## Patentansprüche

1. Sensorsystem (10) insbesondere zum Einsatz am Achsende eines Nutzfahrzeuges, umfassend eine Platine (20) und zumindest einen Sensor (30), wobei die Platine (20) zumindest einen Befestigungsabschnitt (22) zur Festlegung an einem rotierenden Teil einer Radaufhängung aufweist,
wobei eine Energiequelle (40) vorgesehen ist, welche elektrisch leitend mit der Platine (20) verbunden ist,
wobei der zumindest eine Sensor (30) ortsfest an der Platine (20) festgelegt oder festlegbar ist und als Temperatursensor (30A), als Feuchtigkeitssensor (30B), als Öldampf- und/oder Aerosolsensor (30C), als Vibrationssensor (30D), oder als Beschleunigungssensor (30E) ausgelegt ist,
wobei die Sensoranordnung (10) ein Kommunikationsmodul (50) aufweist, welches elektrisch leitend mit der Platine (20) verbunden ist und zur drahtlosen Kommunikation mit einem Überwachungssystem (100) ausgelegt ist, wobei das Sensorsystem (10) zur Festlegung an einer Radkappe (1) mit einem Grundkörper (2) ausgebildet ist und der Grundköper (2) einen Rotationsmittelpunkt (M) aufweist,
**dadurch gekennzeichnet, dass** die Platine (20) zumindest abschnittsweise kreisringförmig um den Rotationsmittelpunkt (M) ausgebildet ist.

2. Sensorsystem (10) nach Anspruch 1,
wobei die Energiequelle (40) in der Platine (20) integriert vorgesehen ist, oder lösbar an der Platine (20) festlegbar ist und elektrisch mit der Platine (20) verbunden ist, oder zumindest teilweise nicht unmittelbar an der Platine (20) festgelegt und elektrisch leitend mit der Platine (20) verbunden ist.

3. Sensorsystem (10) nach einem der vorhergehenden Ansprüche,
wobei die Energiequelle (40) einen Energiespeicher (42) aufweist, welcher ausgelegt ist, elektrische Energie zur speichern.

4. Sensorsystem (10) nach einem der vorhergehenden Ansprüche,
wobei die Energiequelle (40) einen Energieerzeuger (44) aufweist, welcher dafür ausgelegt ist elektrische Energie aus relativen Bewegungen von Teilen der Radaufhängung oder aus Strahlungsenergie zu erzeugen.

5. Sensorsystem (10) nach Anspruch 4,
wobei der Energieerzeuger (44) einen induktiven Spannungserzeuger (44A) aufweist ist, welcher zumindest eine Spule (46) zur Spannungsinduktion aufweist.

6. Sensorsystem (10) nach Anspruch 5,
weiterhin umfassend einen Felderzeuger (47), welcher zur Festlegung am feststehenden Teil der Radaufhängung ausgebildet ist,
wobei der Felderzeuger (47) ein Magnetfeld oder ein elektrisches Feld bereitstellt, innerhalb welchem die Spule (46) angeordnet ist.

7. Sensorsystem (10) nach Anspruch 3 und einem der Ansprüche 4 bis 6,
wobei der Energieerzeuger (44) ein Photovoltaik-Modul (44B) aufweist, welches dafür ausgelegt ist, eine elektrische Spannung in den Energiespeicher (42) einzuspeisen.

8. Sensorsystem (10) nach einem der vorhergehenden Ansprüche,
aufweisend zumindest zwei Sensoren (30), vorzugsweise zumindest drei Sensoren (30),
wobei bevorzugt zumindest einer der Sensoren (30) als Temperatursensor (30A) ausgelegt ist.

9. Sensorsystem (10) nach einem der vorhergehenden Ansprüche,
wobei an der Platine (20) und/oder im Überwachungssystem (100) eine Auswerteeinheit (60) vorgesehen ist, welche dafür ausgelegt ist, die von dem zumindest einen Sensor (30) empfangenen Signale mit gespeicherten Referenzwerten zu vergleichen,
wobei die Auswerteeinheit (60) dazu ausgelegt ist, bei einer voreingestellten Abweichung eines Signals von einem Referenzwert eine Warnung auszugeben.

10. Radkappe (1), insbesondere zum Einsatz am Achsende eines Nutzfahrzeuges, aufweisend einen Grundkörper (2), welcher im Wesentlichen scheibenförmig ausgebildet ist,
wobei der Grundkörper (2) eine erste Seite (3) aufweist, an welcher eine Platine (20) eines Sensorsystems (10) nach einem der Ansprüche 1 - 9 festgelegt ist.

11. Radkappe (1) nach Anspruch 10,
aufweisend ein Sensorsystem (10) nach Anspruch 7,
wobei das Photovoltaik-Modul (44B) an einer, der ersten Seite (3) abgewandten zweiten Seite (4) des Grundkörpers (2) angeordnet und festgelegt ist,
wobei die zweite Seite (4) bezogen auf das Achsende die nach außen gewandte Seite des Grundkörpers (2) ist.

12. Radkappe (1) nach einem der Ansprüche 10 oder 11 mit einem Sensorsystem (10) nach Anspruch 8,
wobei zumindest einer der Sensoren (30) beabstandet vom Rotationsmittelpunkt (M) angeordnet ist.

13. Radkappe (1) nach einem der Ansprüche 10 bis 12 mit einem Sensorsystem (10) nach Anspruch 4,
wobei die Spule (46) beabstandet vom Rotationsmittelpunkt (M) des Grundkörpers (2) angeordnet ist,
wobei der Abstand der Spule (46) vom Rotationsmittelpunkt (M) mit Vorteil ein 0,1- bis 0,3-faches des mittleren Außenradius' (R) des Grundkörpers (2) ist.

14. Verfahren zur Zustandsüberwachung an einer Radaufhängung, umfassend die Schritte:
a) Bereitstellen einer Radkappe (1) nach einem der Ansprüche 10 bis 13 und Festlegen der Radkappe (1) an einem Achsende der Radaufhängung, wobei die Radkappe (1) mit einem Grundkörper (2) ausgebildet ist und der Grundköper (2) einen Rotationsmittelpunkt (M) aufweist,
wobei die Platine (20) zumindest abschnittsweise kreisringförmig um den Rotationsmittelpunkt (M) ausgebildet ist;
b) Auswerten der von dem zumindest einen Sensor (30) empfangenen Signale, um eine Abweichung der Signalwerte von gespeicherten Referenzwerte zu ermitteln;
c) Basierend auf der ermittelten Abweichung, Ermitteln eines Systemzustandes der Radaufhängung;
d) Ausgabe einer Information zum Systemzustand an einen Fahrzeugführer und/oder eine zentrale Verwaltung.

## Claims

1. Sensor system (10), in particular for use at the axle end of a commercial vehicle, comprising a circuit board (20) and at least one sensor (30),
wherein the circuit board (20) has at least one mounting section (22) for mounting it to a rotating part of a wheel suspension,
wherein a power source (40) is provided, which is electrically connected to the circuit board (20),
wherein the at least one sensor (30) is or can be fixedly mounted on the circuit board (20) and is designed as a temperature sensor (30A), a humidity sensor (30B), an oil vapor and/or aerosol sensor (30C), a vibration sensor (30D), or as an acceleration sensor (30E),
wherein the sensor assembly (10) has a communication module (50) that is electrically connected to the circuit board (20) and is designed for wireless communication with a monitoring system (100),
wherein the sensor system (10) is designed to be mounted on a wheel cap (1) and has a base body (2), and the base body (2) has a center of rotation (M),
**characterized in that** the circuit board (20) is designed, at least partially, as a circular ring around the center of rotation (M).

2. Sensor system (10) according to claim 1,
wherein the power source (40) is integrally provided in the circuit board (20), or is detachably mounted to the circuit board (20) and is electrically connected to the circuit board (20), or is at least partially not directly mounted to the circuit board (20) and is electrically connected to the circuit board (20).

3. Sensor system (10) according to any one of the preceding claims,
wherein the power source (40) has an energy storage device (42) designed to store electrical energy.

4. Sensor system (10) according to any one of the preceding claims,
wherein the power source (40) has a power generator (44) designed to generate electrical energy from relative movements of parts of the wheel suspension or from radiant energy.

5. Sensor system (10) according to claim 4,
wherein the energy generator (44) has an inductive voltage generator (44A) that has at least one coil (46) for inducing voltage.

6. Sensor system (10) according to claim 5,
further comprising a field generator (47) designed to be mounted to the stationary part of the wheel suspension,
wherein the field generator (47) provides a magnetic field or an electric field within which the coil (46) is disposed.

7. Sensor system (10) according to claim 3 and any one of claims 4 to 6,
wherein the power generator (44) has a photovoltaic module (44B) designed to supply an electrical voltage to the energy storage device (42).

8. Sensor system (10) according to any one of the preceding claims,
having at least two sensors (30), preferably at least three sensors (30),
wherein, preferably, at least one of the sensors (30) is designed as a temperature sensor (30A).

9. Sensor system (10) according to any one of the preceding claims,
wherein an evaluation unit (60) is provided on the circuit board (20) and/or in the monitoring system (100), which is designed to compare the signals received from the at least one sensor (30) with stored reference values,
wherein the evaluation unit (60) is designed to issue a warning in the event of a preset deviation of a signal from a reference value.

10. Wheel cap (1), in particular for use at the axle end of a commercial vehicle, having a base body (2) that is essentially disc-shaped,
wherein the base body (2) has a first side (3) to which a circuit board (20) of a sensor system (10) according to any one of claims 1-9 is mounted.

11. Wheel cap (1) according to claim 10,
having a sensor system (10) according to claim 7,
wherein the photovoltaic module (44B) is arranged and mounted on a second side (4) of the base body (2) opposite the first side (3),
wherein the second side (4) is the outward-facing side of the base body (2) relative to the axle end.

12. Wheel cap (1) according to any one of claims 10 or 11, having a sensor system (10) according to claim 8,
wherein at least one of the sensors (30) is arranged at a distance from the center of rotation (M).

13. Wheel cap (1) according to any one of claims 10 through 12, having a sensor system (10) according to claim 4,
wherein the coil (46) is arranged at a distance from the center of rotation (M) of the base body (2),
wherein the distance of the coil (46) from the center of rotation (M) is advantageously 0.1 to 0.3 times the mean outer radius (R) of the base body (2).

14. Method for condition monitoring a wheel suspension, comprising the steps of:
a) providing a wheel cap (1) according to any one of claims 10 to 13 and mounting the wheel cap (1) to an axle end of the wheel suspension, wherein the wheel cap (1) is formed with a base body (2) and the base body (2) has a center of rotation (M),
wherein the circuit board (20) is formed, at least partially, as a circular ring around the center of rotation (M);
b) evaluating the signals received by the at least one sensor (30) to determine a deviation of the signal values from stored reference values;
c) based on the determined deviation, determining a system state of the wheel suspension;
d) outputting an information regarding the system state to a driver and/or a central management system.

## Revendications

1. Système capteur (10), destiné en particulier à être utilisé à l'extrémité d'un essieu d'un véhicule utilitaire, comprenant une platine (20) et au moins un capteur (30), dans lequel
la platine (20) comporte au moins une partie de fixation (22) destinée à être fixée à un élément rotatif d'une suspension de roue,
il est prévu une source d'énergie (40) qui est reliée de manière électriquement conductrice à la platine (20),
ledit au moins un capteur (30) est fixé ou peut être fixé de manière stationnaire à la platine (20) et est conçu comme un capteur de température (30A), comme un capteur d'humidité (30B), comme un capteur de vapeur d'huile et/ou d'aérosol (30C), comme un capteur de vibrations (30D) ou comme un capteur d'accélération (30E),
l'ensemble capteur (10) comporte un module de communication (50) qui est relié de manière électriquement conductrice à la platine (20) et qui est conçu pour la communication sans fil avec un système de surveillance (100),
le système capteur (10) est conçu pour être fixé sur un enjoliveur (1) comprenant un corps de base (2), le corps de base (2) présente un centre de rotation (M),
**caractérisé en ce que**
la platine (20) est réalisée au moins localement sous forme d'anneau circulaire autour du centre de rotation (M).

2. Système capteur (10) selon la revendication 1,
dans lequel la source d'énergie (40) est intégrée à la platine (20) ou peut être fixée de manière amovible à la platine (20) et est reliée électriquement à la platine (20), ou n'est pas fixée, au moins en partie, directement à la platine (20) et est reliée de manière électriquement conductrice à la platine (20).

3. Système capteur (10) selon l'une des revendications précédentes,
dans lequel la source d'énergie (40) comprend un dispositif de stockage d'énergie (42) conçu pour stocker de l'énergie électrique.

4. Système capteur (10) selon l'une des revendications précédentes,
dans lequel la source d'énergie (40) comprend un générateur d'énergie (44) conçu pour produire de l'énergie électrique à partir des mouvements relatifs des éléments de la suspension de roue ou à partir d'énergie rayonnante.

5. Système capteur (10) selon la revendication 4,
dans lequel le générateur d'énergie (44) comprend un générateur de tension inductif (44A) qui comporte au moins une bobine (46) destinée à l'induction de tension.

6. Système capteur (10) selon la revendication 5,
comprenant en outre un générateur de champ (47) conçu pour être fixé à la partie fixe de la suspension de roue,
le générateur de champ (47) fournissant un champ magnétique ou un champ électrique à l'intérieur duquel est disposée la bobine (46).

7. Système capteur (10) selon la revendication 3 et l'une des revendications 4 à 6,
dans lequel le générateur d'énergie (44) comprend un module photovoltaïque (44B) conçu pour alimenter le dispositif de stockage d'énergie (42) en tension électrique.

8. Système capteur (10) selon l'une des revendications précédentes,
comportant au moins deux capteurs (30), de préférence au moins trois capteurs (30),
l'un au moins des capteurs (30) étant de préférence conçu comme un capteur de température (30A).

9. Système capteur (10) selon l'une des revendications précédentes,
dans lequel une unité d'évaluation (60) est prévue sur la platine (20) et/ou dans le système de surveillance (100) et est conçue pour comparer les signaux, reçus dudit au moins un capteur (30), à des valeurs de référence mémorisées,
l'unité d'évaluation (60) est conçue pour émettre un avertissement en cas d'écart prédéfini d'un signal par rapport à une valeur de référence.

10. Enjoliveur (1), destiné en particulier à être utilisé à l'extrémité d'un essieu d'un véhicule utilitaire, comportant un corps de base (2) qui est sensiblement en forme de disque,
le corps de base (2) présentant une première face (3) sur laquelle est fixée une platine (20) d'un système capteur (10) selon l'une des revendications 1 à 9.

11. Enjoliveur (1) selon la revendication 10,
comportant un système capteur (10) selon la revendication 7,
le module photovoltaïque (44B) étant disposé et fixé sur une deuxième face (4) du corps de base (2) détournée de la première face (3),
la deuxième face (4) étant, par rapport à l'extrémité de l'essieu, la face du corps de base (2) tournée vers l'extérieur.

12. Enjoliveur (1) selon l'une des revendications 10 ou 11,
comportant un système capteur (10) selon la revendication 8,
l'un au moins des capteurs (30) étant disposé à distance du centre de rotation (M).

13. Enjoliveur (1) selon l'une des revendications 10 à 12,
comportant un système capteur (10) selon la revendication 4,
la bobine (46) étant disposée à distance du centre de rotation (M) du corps de base (2),
la distance entre la bobine (46) et le centre de rotation (M) étant de préférence de 0,1 à 0,3 fois le rayon extérieur moyen (R) du corps de base (2).

14. Procédé de surveillance de l'état d'une suspension de roue, comprenant les étapes consistant à :
a) fournir un enjoliveur (1) selon l'une des revendications 10 à 13 et fixer l'enjoliveur (1) à l'extrémité d'un essieu de la suspension de roue,
l'enjoliveur (1) étant pourvu d'un corps de base (2) et le corps de base (2) présentant un centre de rotation (M),
la platine (20) étant réalisée au moins localement sous forme d'anneau circulaire autour du centre de rotation (M) ;
b) évaluer les signaux reçus dudit au moins un capteur (30) afin de déterminer un écart entre les valeurs des signaux et des valeurs de référence mémorisées ;
c) déterminer, sur la base de l'écart déterminé, un état du système de la suspension de roue ;
d) transmettre une information, relative à l'état du système, à un conducteur du véhicule et/ou à une administration centrale.
